# NEW EUROPEAN PATENT SPECIFICATION

(11) **EP 2 160 038 B2**
(45) Date of publication and mention of the opposition decision: **15.04.2015**
(45) Mention of the grant of the patent: 27.10.2010
(21) Application number: 09165408.7
(22) Date of filing: 14.07.2009
(51) Int. Cl.: H04Q 1/45, H04M 7/12

(54) **Tone Signalling**
Tonsignalisierung
Signalisation de tonalité

(30) Priority: 16.07.2008 GB 0812988
(43) Date of publication of application: 03.03.2010
(73) Proprietor: Tunstall Group Limited, Whitley Bridge, Yorkshire DN14 0HR (GB)
(72) Inventor: Byrne, Shaun Clifford, Doncaster, Yorkshire DN14 0HR (GB); Hudson, Jeremy Francis, Doncaster, Yorkshire DH14 0HR (GB)
(74) Representative: Appleyard Lees

(56) References cited:
- EP-A2- 0 851 692
- EP-A2- 1 255 411
- WO-A1-00/77992
- DE-A- 1 487 640
- GB-A- 840 501
- US-A- 3 895 187
- US-A1- 20030 076 248
- US-B1- 6 208 959
- US-B1- 6 961 424
- US-B2- 7 477 694
- DATABASE WAVECOM 'WAVECOM Decoder W51 Manual V.6.6'
- DATABASE MFSK HISTORY 05 June 2008
- DATABASE DIGITAL SIGNALS 21 April 2001 'Digital Signals FAQ Version: 5.0'
- DATABASE MFSK 05 June 2008 'An Introduction to Multi-Frequency Shift Keying (MFSK)'
- 'Technical Handbook for Radio Monitoring I', ISBN 9783833490156 deel ROLAND PRÖSCH: 'Description of modulation techniques and waveforms 2007'
- 'Digitale Signalübertragung', JÖRG VOGT VERLAG, DRESDEN, ISBN 9783938860113 deel HEINRICH NUSZKOWSKI
- 'Specification of Dual Tone Multi-Frequency (DTMF) Transmitters and Receivers', ETSI deel ETSI ES 201 235-1 V1.1.1 (2000-09)
- deel NETWORK DICTIONARY: 'Javvin Technologies Inc.'
- DATABASE WIKIPEDIA 'Multiple frequency-shift keying'
- DATABASE GENAVE ELECTRONICS 12 June 2008 'Two-Tone Paging Signals'
- DATABASE WIKIPEDIA 28 May 2008 'Selective Calling'
- DATABASE GENAVE ELECTRONICS 13 May 2008 'Motorola Quick Call 2 - "QC2"'
- DATABASE MIDIANS 15 October 2006 'MOTOROLA TWO TONE & FOUR TONE PAGING'

## Description

### BACKGROUND

### Technical Field

The invention relates to tone signalling, and in particular to tone signalling over packet-switched networks. In particular, but not exclusively, the invention relates to tone signalling over IP-based networks using a voice-over-Intemet protocol (VoIP).

### Description of Related Art

A common method of tone signalling uses the Dual Tone Multi-Frequency (DTMF) system. DTMF was designed for use on public switched telephone networks (PSTNs) and is used to issue commands to switching systems or related telephony equipment. Also, DTMF is used to allow remote terminals to share information across telephone systems.

Usually, DTMF uses eight different frequency signals split into high-group frequencies and low-group frequencies. The frequency signals are transmitted in composite pairs of one high-group and one low-group frequency to represent 16 different symbols (the numbers "0-9", characters "*" and "#" and the letters "A, B, C, D"). For example, the number "1" is transmitted as a composite of high-group frequency 1209 Hz and low-group frequency 697 Hz (hereinafter referred to as "a DTMF digit") followed by an inter-digit interval. The number "3" is a combination of 1477 Hz and 697 Hz, and so on.

The frequencies of a DTMF system were specifically chosen to prevent harmonics from being incorrectly detected by a receiver as some other, non-transmitted, DTMF frequency.

At a receiver, several checks are normally performed on an incoming signal in order to identify such a signal as a DTMF digit. Those checks are:
i. Energy from a low-group frequency and a high-group frequency must be detected.
ii. Energy from all other low-group and all other high-group frequencies must be absent or less than 55 dBm.
iii. The energy from the single low-group and the single high-group frequency must persist for at least 50 milliseconds.
iv. There must have been an inter-digit interval of at least 45 milliseconds in which there is no energy detected at any of the DTMF frequencies. The minimum duty cycle (tone interval and inter-digit interval) is 100 milliseconds.
v. The receiver should receive the DTMF digits with a signal strength of at least -25 dBm and no more than 0 dBm.
vi. The energy strength of the high-group frequency must be -8 dB to +4 dB relative to the energy strength of the low-group frequency as measured at the receiver. This uneven transmission level is known as the 'twist', and some receiving equipment may not correctly receive signals where the 'twist' is not implemented correctly.
vii. The receiver must correctly detect and decode DTMF despite the presence of dial-tone, including the extreme case of a dial-tone being sent at 0 dBm (which may occur in extremely long loops). Above 600 Hz any other signals detected by the receiver must be at least -6 dB below the low-group frequency signal strength for correct digit detection.

The values above are those published for compatibility with ANSI T1.401-1988.

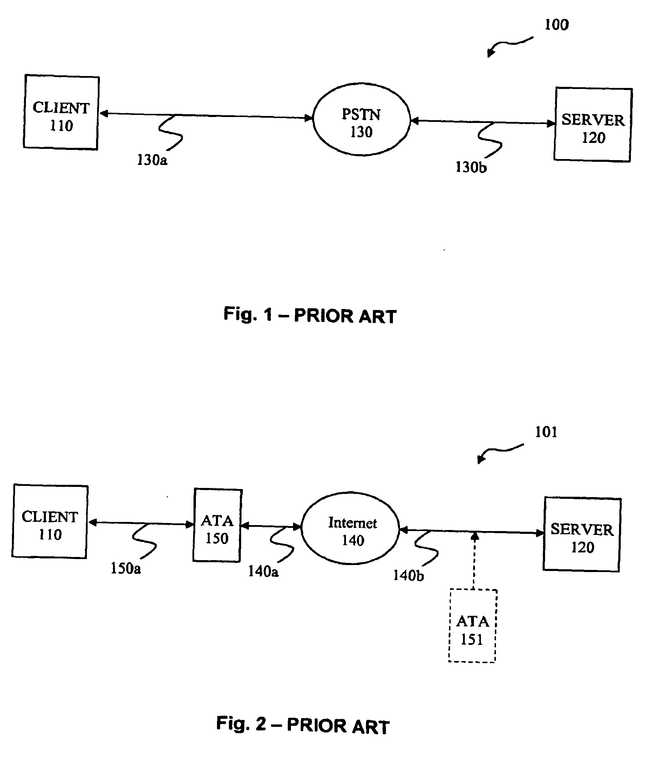

Various DTMF systems have been employed by various organisations communicating over public switched telephone networks (PSTNs). Such a system 100 is shown in Figure 1. As can be seen, the system comprises a client device 110, a server device 120 and a PSTN 130 connecting the client 110 and server 120 by connections 130a and 130b respectively. DTMF experiences few problems over PSTNs.

Figure 2 illustrates a different system 101 in which the PSTN 130 is replaced by a packet switched network 140, for example an IP-based network such as a local area network (LAN) or the Internet. An analogue telephone adaptor (ATA) 150 is arranged to digitize analogue audio data received from an analogue telephone via connector 150a for transmission via digital connection 140a over the packet switched network 140. The server 120 is in turn connected to the packet switched network 140 by a digital connection 140b, typically an Ethernet connection.

A packet switched network uses a communications method in which packets of data are routed between nodes over data links shared with other traffic. In each network node, packets are queued or buffered, resulting in variable delay. This contrasts with the other principal paradigm, circuit switching (exemplified by PSTNs), which set up a limited number of constant bit rate and constant delay connections between nodes for their exclusive use for the duration of the communication.

The ATA 150 functions to connect one or more standard analogue telephones to the packet-switched network. In practice, the ATA 150 usually takes the form of a small box having a power adaptor, one Ethernet port for connection to the Internet 140, and a standard analogue telephone socket. The ATA communicates with a remote VolP server (not shown) over the packet-switched network using a protocol such as H.323, SIP, MGCP, SCCP or IAX, and encodes and decodes the voice signal using a voice codec such as G.711, G.729, GSM, iLBC or others.

However, problems of reliability and performance arise with the system 101 when the client 110 and server 120 desire to communicate using DTMF. This problem is exacerbated when relatively high-speed DTMF communication is used (that is, speeds greater than that produced by a user dialling a telephone number, or entering a pin code for access to a bank account etc). The problems are due mainly to the ATA 150, for example:
i. The exact type, and hence performance, of the ATA 150 is unpredictable because it is normally supplied by a corresponding VoIP telephone provider;
ii. Known ATAs 150 are normally slow to deal with DTMF data;
iii. Known ATAs 150 normally only send DTMF and are not configured to receive and decode DTMF signals;
iv. Known ATAs 150 may simply digitize the DTMF digits as digital audio; or
v. Known ATAs may encode each DTMF digit and send an encoded network message.

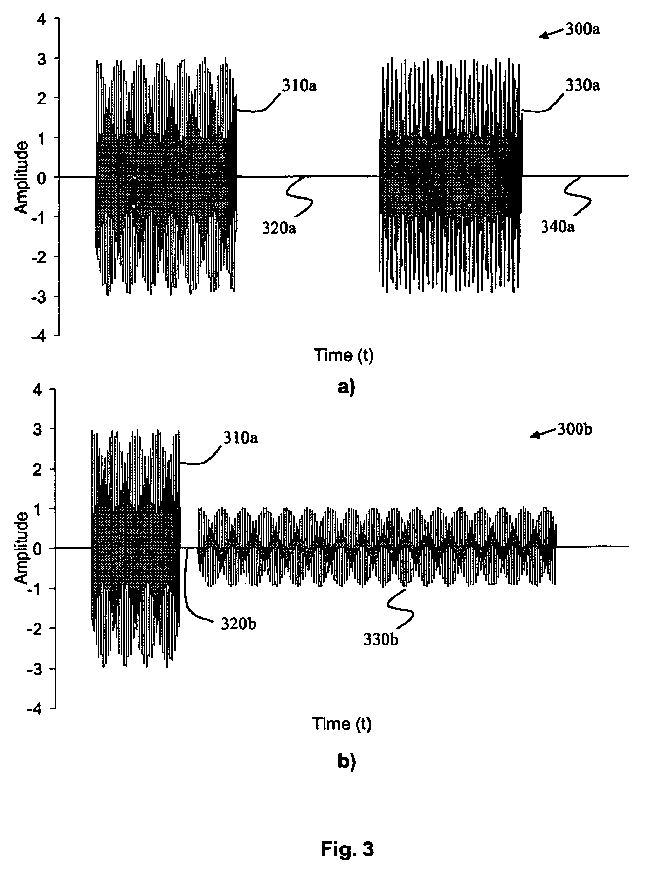

For example, Figure 3 shows how an example ATA 150 might deal with a DTMF sequence 300a. In this case, Figure 3a illustrates the DTMF sequence 300a, which comprises a first DTMF digit 310a representing the number '3' followed by a second DTMF digit 330a representing the number '1'. Each DTMF digit 310a, 330a has a duration of 80 milliseconds and each digit is followed by an 80 millisecond inter-digit gap 320a, 340a.

In the example of Figure 3, the ATA 150 is configured to transmit DTMF digits out of band. The output 300b of the ATA 150 is shown in Figure 3b. The ATA 150 is configured to detect each DTMF digit and inter-digit interval and to replace the analogue DTMF data with reconstructed locally generated DTMF digits. In this example, the ATA 150 detects that a DTMF digit is present 50 milliseconds after the start of the digit, and so part of the original DTMF digit 310a is transmitted by the ATA 150. The ATA 150 then takes a further 10 milliseconds, resulting in gap 320b, to switch from analogue to locally generating DTMF mode, after which time a fixed period DTMF digit of 200 milliseconds generated 330b, thereby obliterating the second DTMF digit 330a in the original DTMF sequence 300a.

This type of ATA 150 is designed to cope with manually dialled signals which create DTMF digits which are longer and slower than typical automatic signalling DTMF sequences. In summary, potential problems with ATAs 150 are:
i. DTMF digits are lost as the ATA 150 switches from analogue DTMF to locally reconstructed DTMF mode.
ii. Differing power levels between analogue, DTMF and locally reconstructed DTMF;
iii. Different twist (that is, relative power of high-frequency and low-frequency tones) between analogue DTMF and locally reconstructed DTMF;
iv. Extended tone timing at the ATAs 150 can result in short tones being missed;
   and
v. Complete loss of a tone, that is a tone is detected but is not locally reconstructed.

Referring back to Figure 2, ATA-introduced problems become worse when, as is sometimes found, a second ATA 151 is introduced between the packet switched network 140 and the server 120. In this situation, there may be two points of failure instead of a single point of failure.

In addition to the above-mentioned problems regarding ATAs 150,151, there is also a problem introduced by the VoIP server. This is because a feature of VoIP systems used to maximise the number of parallel channels is to detect silences (or gaps) in audio signals and to switch the channel off (to become a silent channel) until the audio signal reaches a predetermined threshold. In this way, the bandwidth and priority of the silent channel is reduced, resulting in increased bandwidth and priority of the remaining parallel channels.. Having lost bandwidth and priority, there can be an additional delay re-establishing the silent channel.

US 6,771,641 to Nortel Networks Limited (published in 2004) recognised that DTMF digits are not reliably transmitted across packet switched networks. The proposed solution uses a Session Initiation Protocol (SIP) standard to transport the DTMF digits. The DTMF digits are firstly collected and are then sent as SIP INFO messages. In this way, a channel separate from a voice channel is used for the transportation of DTMF digits. However, this system is reasonably complicated to implement and requires SIP access. On consumer lines, it is unlikely that SIP services will be available to third party products connected to the analogue side of the ATA 151.

EP 0 851 692 A2 to AT&T Corp (published in 1998) discloses a dual-tone multi-frequency signal transfer protocol. A handshake between sending and receiving devices that exchange DTMF signals across a network is accomplished by having the receiving device sender DTMF ready tone (digit) for a prescribed interval following receipt of a call set-up message received after the sending device has initiated a call. Upon receipt of the DTMF ready digit, the sending device sends to the receiving device a data message which includes a string of digits of interest prefixed by M header digits. After receiving at least a portion of the data message, the receiving device stops transmitting the ready digit. Once the receiving device has received the entire data message, the receiving device strips the protocol digits (the M header digits and any of the ready digits received due to echo). By analyzing the stripped protocol digits, the quality of the handshake between the receiving and sending devices can be determined.

EP 1 255 411 A2 to Broadcom Corp (published in 2002) discloses a tone relay. In particular, a system and method is disclosed for detecting and removing tones from an incoming communications channel that may also carry other signals such as, for example, voice which includes pre-detecting tones in a communication signal, processing the communication signal to invalidate the tones in response to the tone pre-detection, forwarding the processed communication signal across a network, validating the tone and forwarding tone-on signals across the network in response to the validation.

### SUMMARY OF THE INVENTION

An aim of the present invention is to mitigate at least one of the above-mentioned problems. In particular, an aim of the invention is to improve resilience to ATA-introduced problems when transmitting DTMF tones across packet switched networks. A further aim is to provide an alternative solution to that proposed in the prior art.

According to the present invention there is provided a system, transmitting apparatus, receiving apparatus and corresponding methods as set forth in the appended independent claims. Other features of the invention will be apparent from the dependent claims, and the description which follows.

According to one aspect of the invention, there is provided a system for transmitting dual tone multi-frequency ("DTMF") digits across a packet-switched network, the system comprising: a client arranged to originate DTMF digits for onward transmission over a packet switched network; a server arranged to receive the DTMF digits; and characterised by a sequential tone multi-frequency generator located between the client and the packet switched network which is arranged to receive the DTMF digits from the client, encode each corresponding DTMF digit as a sequence of a first frequency signal and a second frequency signal arranged one after the other substantially to occupy a DTMF digit time slot and an inter-digit interval time slot respectively, and transmit the sequence over the packet-switched network; and a sequential tone multi-frequency receiver arranged between the packet-switched network and the server and arranged to receive the sequence transmitted by the sequential tone multi-frequency generator and reconstruct from the sequence a corresponding DTMF digit for onward transmission to the server.

Preferably, the system comprises a plurality of networks and the client is able to choose one of the plurality of networks over which to send data, and to send DTMF digits or the encoded sequence as appropriate over the chosen network.

Preferably, the system is configured so that the client and server perform a handshaking routine at a predetermined time and is configured to raise an alarm if the handshaking routine is unsuccessful. Alternatively, the system is configured to switch to one of the plurality of networks to establish a successful handshaking routine. Preferably, the network providing a successful connection is set as a default network, and future communications are primarily routed via the default network. According to another aspect of the invention, there is provided an apparatus for encoding a symbol for transmission over a packet switched network, the apparatus comprising:
a receiving module arranged to receive a symbol for encoding from an external source; an encoding module arranged to encode the symbol as a sequence of a first frequency signal and
a second frequency signal arranged one after the other substantially to occupy a dual tone multi-frequency ("DTMF") digit time slot and an inter-digit interval time slot respectively, and an output module arranged to transmit the sequence over the packet switched network.

According to another aspect of the invention, there is provided an apparatus for decoding a symbol transmitted over a packet switched network, the apparatus comprising: a receiving module arranged to receive a sequence transmitted over the packet switched network of a first frequency signal and a second frequency signal arranged one after the other substantially to occupy a dual tone multi-frequency ("DTMF") digit time slot and an inter-digit interval time slot respectively, a decoding module arranged to decode the sequence into the symbol transmitted over the packet switched network in use by referring to the first and second frequency signals, and an output module for outputting the symbol.

According to another aspect of the invention, there is provided a method of tone signalling over a packet switched network, the method comprising the steps of: receiving a symbol for transmission over the packet switched network; encoding the symbol as first and second frequency components; arranging the first and second frequency components one after the other in a sequence for transmission over the packet switched network substantially to occupy a dual tone multi-frequency ("DTMF") digit time slot and an inter-digit interval time slot respectively; transmitting the sequence over the packet switched network; receiving the sequence; decoding the sequence into the symbol transmitted over the packet switched network in use by referring to the first and second frequency components; and outputting the symbol.

According to another aspect of the invention, there is provided a method of tone signalling over a packet switched network, the method comprising the steps of: receiving a symbol for transmission over the packet switched network; encoding the symbol as first and second frequency components; arranging the first and second frequency components one after the other in a sequence for transmission over the packet switched network substantially to occupy a dual tone multi-frequency ("DTMF") digit time slot and an inter-digit interval time slot respectively; and transmitting the sequence over the packet switched network.

According to another aspect of the invention, there is provided a method of tone signalling over a packet switched network, the method comprising the steps of: receiving over the packet switched network a sequence comprising a first and a second frequency component arranged one after the other substantially to occupy a dual tone multi-frequency ("DTMF") digit time slot and an inter-digit interval time slot respectively; decoding the sequence into a corresponding symbol by referring to the first and second frequency components; and outputting the symbol.

The following optional features are applicable, where appropriate, to each of the above aspects of the invention.

Preferably, the symbol is a standard DTMF symbol. Preferably, each frequency signal or component is a standard DTMF frequency. Preferably, the first frequency signal or component is one of the DTMF low-group frequencies, and the second frequency signal or component is one of the DTMF high-group frequencies.

Preferably, the DTMF digit time slot and inter-digit interval time slot is from 40 to 160 milliseconds. Preferably, the DTMF digit time slot and inter-digit interval time slot is 80 milliseconds.

Preferably, interpolation is performed on each frequency signal or component at the receiving end to remove glitches or other inaccuracies introduced over the packet switched network.

At least some embodiments of the invention may be constructed, partially or wholly, using dedicated special-purpose hardware. Terms such as 'component', 'module' or 'unit' used herein may include, but are not limited to, a hardware device, such as a Field Programmable Gate Array (FPGA) or Application Specific Integrated Circuit (ASIC), which performs certain tasks. Alternatively, elements of the invention may be configured to reside on an addressable storage medium and be configured to execute on one or more processors. Thus, functional elements of the invention may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Further, although the exemplary embodiments have been described with reference to the components, modules and units discussed below, such functional elements may be combined into fewer elements or separated into additional elements.

### BRIEF DESCRIPTION OF THE DRAWINGS

For a better understanding of the invention, and to show how exemplary embodiments may be carried into effect, reference will now be made to the accompanying drawings in which:
Figure 1 is a schematic diagram of a prior art system using DTMF signalling over a PSTN network;
Figure 2 is a schematic diagram of a prior art system using DTMF signalling over a packet-switched network;
Figure 3 is a graphical representation of a DTMF sequence being corrupted during conversion by an analogue telephone adaptor;
Figure 4 is a schematic diagram of a system according to a first embodiment of the invention;
Figure 5 is a graphical representation of a pair of sequential tone multi-frequency signals according to the invention of Figure 4;
Figure 6 is a flow chart showing a method of transmitting DTMF digits over a packet switched network according to the first embodiment of the invention shown in Figure 4;
Figure 7 is a flow chart showing a method of encoding symbols according to a second embodiment of the invention;
Figure 8 is a flow chart showing a method of decoding symbols according to the second embodiment of the invention shown in Figure 7;
Figure 9 is a schematic diagram of a system according to a third embodiment of the invention; and
Figure 10 is a schematic diagram of a system according to a fourth embodiment of the invention.

### DETAILED DESCRIPTION OF THE EXEMPLARY EMBODIMENTS

The following text describes some embodiments of the invention for illustrative purposes.

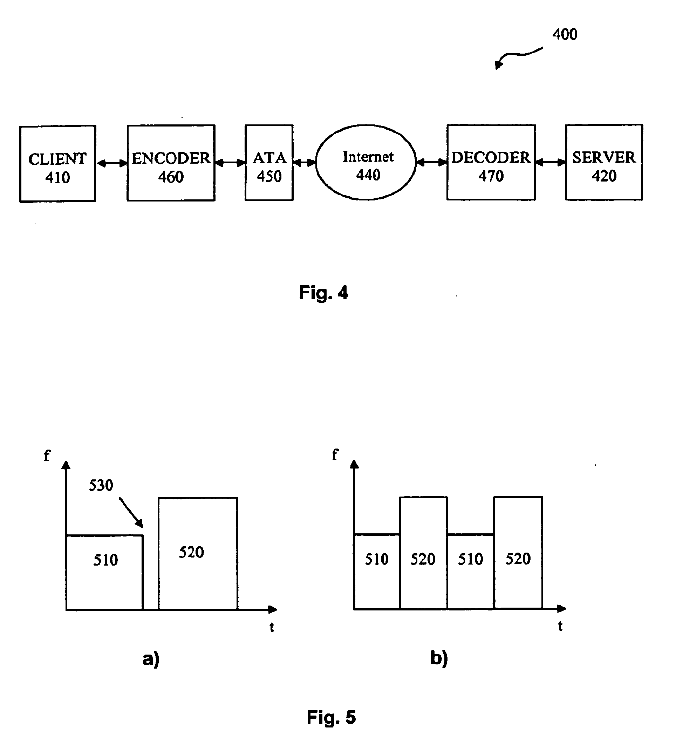

Referring to Figure 4, a first embodiment of the invention is described. A system 400 comprises a client 410, a server 420 and a packet switched network 440 connecting the client 410 and server 420. In the first embodiment, the packet switched network 440 is the Internet, and further comprises a voice-over Internet protocol (VoIP) server. Of course, the invention could be implemented using one or more other packet switched networks such as a local area network (LAN), General Packet Radio Service (GPRS), Universal Mobile Telecommunications System (UMTS) or the like.

The system 400 also comprises an analogue telephone adaptor (450) for digitizing and encoding analogue data originating with the client 410 for onward transmission over the packet switched network 440.

Additionally, the system 400 comprises a sequential tone multi-frequency generator, or encoder, 460 interposed between the client 410 and the analogue telephone adaptor 450. The sequential tone multi-frequency generator 460 is arranged to detect DTMF digits being sent by the client 410. On detection, the DTMF digit is deconstructed into its constituent parts, namely a respective high-group frequency and a respective low-group frequency. Then, the high-group frequency and low-group frequency are output from the sequential tone multi-frequency generator 460 to the analogue telephone adaptor 450 in a side-by-side arrangement making use of the usual DTMF digit time slot and inter-digit interval, referred to as a DTMF time slot.

This is illustrated with reference to Figure 5. Figure 5a) shows a first implementation of a sequential tone multi-frequency digit 500. The digit 500 comprises a high-group frequency signal 510 followed by a low-group frequency signal 520. The high-group frequency signal 510 is transmitted during a period corresponding to a normal DTMF digit time slot. The low-group frequency signal 520 is transmitted during a period corresponding to a normal DTMF inter-digit interval.

The high-group and low-group frequency signals 510,520 correspond to the DTMF standard. For example, the high-group frequency signal 510 is one of 1209 Hz, 1336 Hz, 1477 Hz and 1633 Hz depending on the symbol being represented. Likewise, the low-group frequency signal 520 is one of 697 Hz, 770 Hz, 852 Hz and 941 Hz.

In this example, the high-group frequency signal 510 is transmitted first. The skilled person would understand that the low-group frequency signal 520 may advantageously be transmitted first.

Also, the high-group frequency signal 510 and low-group frequency signal 520 are shown to be transmitted with a relatively small gap 530 separating the frequency signals 510,520. In practice, a short gap is normally present between the high-group frequency signal 510 and low-group frequency signal 520 due to hardware constraints. In practical implementations it may not be possible to avoid a small gap and the system should be tolerant of small gaps, for example gaps of around 5 to 10 milliseconds. However, some systems may be able to achieve a gap 530 approaching or reaching 0 milliseconds which is advantageous.

Referring now to Figure 5b), an alternative example of a sequential tone multi-frequency digit is shown where two pulses of the same high-group frequency signal 510 are generated, each followed by a respective low-group frequency signal 520 of similar duration. The two high-group signals 510 and two low-group signals 520 represent a single digit, and are transmitted interlaced. As the reader will see, each frequency signal 510, 520 is approximately half the duration of the corresponding frequency signal in Figure 5a). So, in other words, four pulses fill the DTMF time slot in Figure 5b), where as two pluses fill the DTMF time slot in Figure 5a).

In the preferred embodiment, each DTMF time slot which is being replaced by the sequential tone multi-frequency signal is 160 milliseconds in duration. So, in the example shown in Figure 5a), the high-group frequency signal 510 has a duration of approximately 80 milliseconds, and the low-group frequency signal 520 has a duration of approximately 80 milliseconds.

In the example shown in Figure 5b), each high-group frequency signal 510 has a duration of approximately 40 milliseconds, and likewise each low-group frequency signal has a duration of approximately 40 milliseconds. Of course, the skilled person would realise that other durations could be used which still allow the invention to be practiced.

Referring back to Figure 4, the system 400 also comprises a sequential tone multi-frequency receiver, or decoder, 470 which complements the sequential tone multi-frequency generator 460. In other words, the sequential tone multi-frequency receiver 470 receives the sequential tone multi-frequency digits as illustrated in Figure 5 and constructs equivalent DTMF digits.

In this way, both the higher-level client 410 and server 420 can use existing DTMF technology and components to communicate using DTMF signalling over a packet-switched network 440. This allows existing equipment to remain in operation thus saving costs, reducing demand on limited resources such as raw materials and waste disposal.

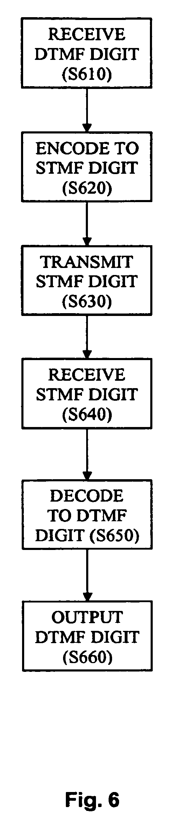

Figure 6 is a flow chart outlining the main operational steps of the system 400 in use as follows:
Step S610: receiving a DTMF digit for transmission over the packet switched network;
Step S620: encoding the DTMF digit as first and second frequency components by arranging the first and second frequency components one after the other in a sequence substantially to occupy a DTMF digit time slot and an inter-digit interval time slot respectively;
Step S630: transmitting the sequence over the packet switched network;
Step S640: receiving the sequence;
Step S650: decoding the sequence into the symbol transmitted over the packet switched network in use by referring to the received first and second frequency components; and
Step S660: outputting the DTMF digit.

In a second embodiment, the STMF generator 460 is implemented in software as part of the client 410. In this case, or indeed in a hardware implementation, there may be no need to analyse an analogue DTMF digit. Rather, a sequential tone multi-frequency signal generated directly from the a symbol to be transmitted to the server 420. Such a symbol could include the digits 0-9, the characters * and #, and the letters A, B, C and D. Again, at the receiving end, the symbol need not be decoded into a DTMF digit, but may instead be decoded directly into the symbol transmitted for output to another application.

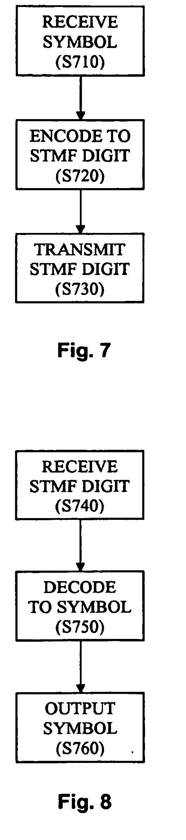

The second embodiment is illustrated with reference to the flow charts of Figure 7 and Figure 8.

Figure 7 shows a transmitting method, comprising:
Step S710: receiving a symbol for transmission over a packet switched network;
Step S720: encoding the symbol as first and second frequency components and arranging the first and second frequency components one after the other in a sequence substantially to occupy a DTMF digit time slot and an inter-digit interval time slot respectively; and
Step S730: transmitting the sequence over the packet switched network.

Figure 8 shows a corresponding receiving method, comprising:
Step S740: receiving over the packet switched network a sequence comprising a first and a second frequency component arranged one after the other substantially to occupy a dual tone multi-frequency ("DTMF") digit time slot and an inter-digit interval time slot respectively;
Step S750: decoding the sequence into a corresponding symbol by referring to the first and second frequency components; and
Step S760: outputting the symbol.

It will also be appreciated by the skilled person that the sequential tone multi-frequency generator 460 could be configured to act as a sequential tone multi-frequency receiver 470, and vice versa.

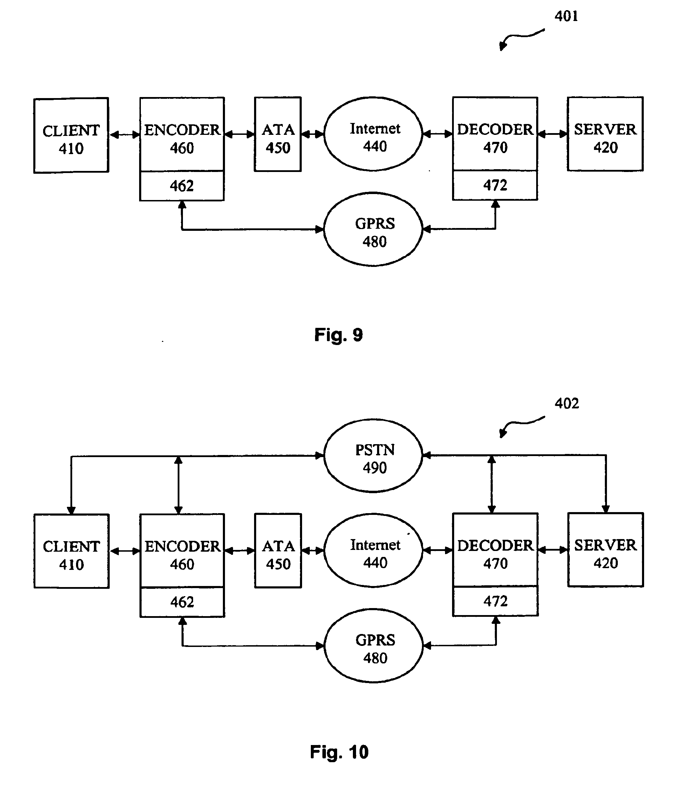

Figure 9 illustrates a second embodiment of the invention.

A modified system 401 is shown in which an alternative route is provided between the client 410 and the server 420. The alternative route is a GPRS network 480 in this case, and the sequential tone multi-frequency generator 460 is provided with an integrated transmitter 462 which is arranged to encode analogue signals for transmission over the GPRS network 480.

The GPRS transmitter 462 establishes a communications link with the GPRS network 480. A further communications link is established between the GPRS network 480 and the sequential tone multi-frequency receiver 470 which has a corresponding GPRS receiver 472. Alternatively, the GPRS network 480 may route the audio data to the sequential tone multi-frequency receiver 470 via the Internet 440. It is to be noted that both the Internet 440 and the GSM network 480 use packet-switching protocols.

Aside from the above differences, the second embodiment works in essentially the same way as the first embodiment, using the previously described sequential tone multi-frequency digits to replace DTMF digits.

Figure 10 shows a third embodiment of the invention.

In this embodiment, a modified system 402 is much like the system 401 shown in Figure 9 but with the addition of a public switched telephone network (PSTN) 490 arranged to receive analogue audio signals either directly from the client 410 or via the encoder 460 and to forward these audio signals either directly to the server 420 or via the decoder 470 respectively.

In this case, either the Internet 440 or GPRS network 480 is able to switch signals through the PSTN network 490 in order that they reach the sequential tone multi-frequency receiver, or decoder, 470. Of course, appropriate digital to analogue conversation will need to occur between the Internet 440 and the PSTN 490 and the GPRS network 480 and the PSTN 490.

Both the second embodiments shown respectively in Figures 9 and 10 introduce redundancy into the system. For example, the client 410 may be set to send data to the server 420 using the Internet 440 as a standard conduit. However, should there be a problem with the Internet service provided to the owner of the client 410, the system can be configured to switch to using the GSM network 480 or PSTN network 490 as appropriate.

Of course, the embodiments of the invention show only a single ATA 450. located at the client-side of the packet switched network 440. In practice, there may be other ATAs located in the system. For example, referring back to Figure 2, there may be an ATA 151 at the server-side of the packet switched network 440, or bridging a pair of packet switched networks. In any case, the tone signalling method and apparatus described mitigates the effect of each and every ATA in the system.

In one configuration, the system 402 could send data using the default route until failure, then the signal could try other routes until handshaking between client 410 and server 420 is established. Then, the other signal route could be made a replacement signal route. This process could be repeated indefinitely.

In an alternative configuration, the system 402 could be arranged to perform handshaking during predetermined time intervals. If the server 420 and client 410 do not successfully perform handshaking, an alarm is raised, or an alternative network is sought. If a successful connection is established, this is then made the default network for future communications. This can also be useful for a pre-emptive detection of an exchange swap where a client has changed their telephone supply from a PSTN system to a VoIP system, for example. In this case, the client 410 is configured to use the encoder 460 when sending DTMF digits over the packet switched network 440.

Another advantage of the present invention is that interpolation can be used to recover a sequential tone multi-frequency signal where packet loss in a packet-switched network 440, 480 introduces gaps or glitches into a sequential tone multi-frequency signal. By interpolating, the gaps and glitches can be removed. For example, a pulse of 1477 Hz lasting a duration of 80 milliseconds may be transmitted. However, due to packet loss, two separate pulses are received of 50 milliseconds and 20 milliseconds separated by a gap of 10 milliseconds. Using interpolation, the received signal is interpreted as a pulse of 1477 Hz for a duration of 80 milliseconds.

The invention also improves the signal to noise ratio over standard DTMF signals. This is because the sequential tone multi-frequency allows energy to be transmitted over the full duration of the normal DTMF time interval. In other words, there is no gap, or the gap is vastly reduced.

Additionally, the invention utilises a technique of doubling up on certain command tone sequences. For example, a cleardown command is sent as "##" and not merely "#". This is because certain users have a voice profile which contains DTMF digits which could inadvertently trigger command signals where a voice and a data channel are shared.

To recap on some of the advantages of the present invention over the prior art, the invention provides:
i. Increased predictability and reliability of DTMF signal handling because ATAs will not receive composite DTMF tones;
ii. Increased signal to noise ratio because more signal power is transmitted;
iii. Interpolation of lost data (for example due to VoIP packet loss) is easier as only a single frequency need be analysed, and not a composite frequency;
iv. The sequential tone multi-frequency signal is more resilient to stray DTMF interference pickup, for example from capacity of coupling between adjacent wires in long cables; and increased predictability, security and privacy as a sequential tone multi-frequency signals will pass through commercial of-the-shelf DTMF analysers; and
v. There are no substantial gaps to cause a VoIP server to turn the channel to silent.

Of course, while the embodiments show signals travelling from client 410 to server 420, signals could equally well travel in the reverse direction from server 420 to client 410. For this purpose, each encoder 460 and decoder 470 would be a combined encoder/decoder.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for transmitting dual tone multi-frequency, "DTMF", digits across a packet-switched network (440), the system comprising:
a client (410) arranged to originate DTMF digits for onward transmission over a packet switched network (440);
a server (420) arranged to receive the DTMF digits; and
**characterised by**:
a sequential tone multi-frequency generator (460) located between the client (410) and the packet switched network (440) which is arranged to receive the DTMF digits from the client (410), encode each corresponding DTMF digit as a sequence of a first frequency signal and a second frequency signal arranged one after the other substantially to occupy a DTMF digit time slot and an inter-digit interval time slot respectively, and transmit the sequence over the packet-switched network (440); and
a sequential tone multi-frequency receiver (470) arranged between the packet-switched network (440) and the server (420) and arranged to receive the sequence transmitted by the sequential tone multi-frequency generator (460) and reconstruct from the sequence a corresponding DTMF digit for onward transmission to the server (420).

2. The system according to claim 1, wherein the system (400) comprises a plurality of networks (400,401,402) and the client (410) is able to choose one of the plurality of networks (400,401,402) over which to send data, and to send DTMF digits or the encoded sequence as appropriate over the chosen network.

3. The system according to claim 1 or claim 2, wherein the system (400) is configured so that the client (410) and server (420) perform a handshaking routine at a predetermined time and is configured to raise an alarm if the handshaking routine is unsuccessful.

4. The system according to claim 1 or claim 2, wherein the system is configured to switch to one of the plurality of networks (400,401,402) to establish a successful handshaking routine.

5. The system according to claim 4, wherein the network providing a successful connection is set as a default network, and future communications are primarily routed via the default network.

6. An apparatus for encoding a symbol for transmission over a packet switched network (440), the apparatus (460) comprising:
a receiving module arranged to receive a symbol for encoding from an external source;
**characterised by**:
an encoding module arranged to encode the symbol as a sequence of a first frequency signal (510) and a second frequency signal (520) arranged one after the other substantially to occupy a dual tone multi-frequency, "DTMF", digit time slot (310a) and an inter-digit interval time slot (320a) respectively, and
an output module arranged to transmit the sequence over the packet switched network (440).

7. An apparatus for decoding a symbol transmitted over a packet switched network (440), the apparatus (470) **characterised by**:
a receiving module arranged to receive a sequence transmitted over the packet switched network (440) of a first frequency signal (510) and a second frequency signal (520) arranged one after the other substantially to occupy a dual tone multi-frequency, "DTMF", digit time slot (310a) and an inter-digit interval time slot (320a) respectively,
a decoding module arranged to decode the sequence into the symbol transmitted over the packet switched network (440) in use by referring to the first and second frequency signals (520), and
an output module for outputting the symbol.

8. A method of tone signalling over a packet switched network (440), the method comprising the steps of:
receiving a symbol for transmission over the packet switched network (440);
encoding the symbol as first and second frequency components (510, 520);
**characterised by**:
arranging the first and second frequency components (510, 520) one after the other in a sequence for transmission over the packet switched network (440) substantially to occupy a dual tone multi-frequency, "DTMF", digit time slot (310a) and an inter-digit interval time slot (320a) respectively;
transmitting the sequence over the packet switched network (440);
receiving the sequence; decoding the sequence into the symbol transmitted over the packet switched network (440) in use by referring to the first and second frequency components (510, 520); and
outputting the symbol.

9. A method of tone signalling over a packet switched network (440), the method comprising the steps of:
receiving a symbol for transmission over the packet switched network (440);
encoding the symbol as first and second frequency components (510, 520);
**characterised by**:
arranging the first and second frequency components (510, 520) one after the other in a sequence for transmission over the packet switched network (440) substantially to occupy a dual tone multi-frequency, "DTMF", digit time slot (310a) and an inter-digit interval time slot (320a) respectively; and
transmitting the sequence over the packet switched network (440).

10. A method of tone signalling over a packet switched network (440), the method **characterised by** the steps of:
receiving over the packet switched network (440) a sequence comprising a first and a second frequency component arranged one after the other substantially to occupy a dual tone multi-frequency, "DTMF", digit time slot (310a) and an inter-digit interval time slot (320a) respectively;
decoding the sequence into a corresponding symbol by referring to the first and second frequency components (510, 520); and
outputting the symbol.

11. The system, apparatus or method of any preceding claim, wherein the symbol is a standard DTMF symbol.

12. The system, apparatus or method of any preceding claim, wherein each frequency signal or component is a standard DTMF frequency.

13. The system, apparatus or method of any preceding claim, wherein the first frequency signal or component (510) is one of the DTMF low-group frequencies, and the second frequency signal or component (520) is one of the DTMF high-group frequencies.

14. The system, apparatus or method of any preceding claim, wherein the DTMF digit time slot (310a) and inter-digit interval time slot (320a) each last from around 40 to 160 milliseconds.

15. The system, apparatus or method of any preceding claim, wherein the DTMF digit time slot (310a) and inter-digit interval time slot (320a) is around 80 milliseconds.

## Patentansprüche

1. System zum Übertragen von Doppeltonmehrfrequenz-("DTMF")-Ziffern über ein paketvermitteltes Netz (440), umfassend:
einen Client (410) zum Erstellen von DTMF-Ziffern zur Weiterübertragung über ein paketvermitteltes Netz (440) ;
einen Server (420) zum Empfangen der DTMF-Ziffern und
**gekennzeichnet durch**:
einen zwischen dem Client (410) und dem paketvermittelten Netz (440) befindlichen Sequenztonmehrfrequenzgenerator (460) zum Empfangen der DTMF-Ziffern von dem Client (410), Codieren jeder entsprechenden DTMF-Ziffer als eine Folge eines nacheinander angeordneten ersten Frequenzsignals und zweiten Frequenzsignals im Wesentlichen zum Belegen eines DTMF-Tonzeitschlitzes bzw. eines Tonpausen-Zeitschlitzes und Übertragen der Sequenz über das paketvermittelte Netz (440) und
einen Sequenztonmehrfrequenzempfänger (470), angeordnet zwischen dem paketvermittelten Netz (440) und dem Server (420) und zum Empfangen der **durch** den Sequenztonmehrfrequenzgenerator (460) übertragenen Sequenz und Rekonstruieren einer entsprechenden DTMF-Ziffer aus der Sequenz zur Weiterübertragung zum Server (420).

2. System nach Anspruch 1, wobei das System (400) eine Mehrzahl von Netzen (400, 401, 402) umfasst und der Client (410) eines der Mehrzahl von Netzen (400, 401, 402) wählen kann, über das er Daten senden kann, und DTMF-Ziffern oder gegebenenfalls die codierte Sequenz über das gewählte Netz senden kann.

3. System nach Anspruch 1 oder Anspruch 2, wobei das System (400) so aufgebaut ist, dass der Client (410) und Server (420) eine Quittungsroutine zu einer vorbestimmten Zeit durchführen, und zum Alarmgeben, wenn die Quittungsroutine erfolglos ist, aufgebaut ist.

4. System nach Anspruch 1 oder Anspruch 2, wobei das System aufgebaut ist, zu einem der Mehrzahl von Netzen (400, 401, 402) umzuschalten, um eine erfolgreiche Quittungsroutine herzustellen.

5. System nach Anspruch 4, wobei das eine erfolgreiche Verbindung bereitstellende Netz als ein Vorgabenetz eingestellt wird und zukünftige Kommunikationen hauptsächlich über das Vorgabenetz geleitet werden.

6. Vorrichtung zum Codieren eines Symbols für die Übertragung über ein paketvermitteltes Netz (440), wobei die Vorrichtung (460) ein Empfangsmodul zum Empfangen eines Symbols zur Codierung von einer externen Quelle umfasst;
**gekennzeichnet durch**:
ein Codierungsmodul zum Codieren des Symbols als eine Sequenz aus einem ersten Frequenzsignal (510) und einem zweiten Frequenzsignal (520), die aufeinanderfolgen, um im Wesentlichen jeweils einen Doppeltonmehrfrequenz-("DTMF)-Tonzeitschlitz (310a) bzw. einen Tonpausen-Zeitschlitz (320a) zu belegen, und ein Ausgangsmodul zum Übertragen der Sequenz über das paketvermittelte Netz (440).

7. Vorrichtung zum Decodieren eines über ein paketvermitteltes Netz (440) übertragenen Symbols, wobei die Vorrichtung (470) **gekennzeichnet ist durch**:
ein Empfangsmodul zum Empfangen einer Sequenz, welches über das paketvermittelte Netz (440) übertragen worden ist, eines ersten Frequenzsignals (510) und eines zweiten Frequenzsignals (520), die im Wesentlichen nacheinander angeordnet sind, zum Belegen eines Doppeltonmehrfrequenz-("DTMF")-Tonzeitschlitzes (310a) bzw. eines Tonpausen-Zeitschlitzes (320a), ein Decodiermodul zum Decodieren der Sequenz in das über das paketvermittelte Netz (440) übertragene Symbol durch Bezugnahme auf das erste und zweite Frequenzsignal (520) und ein Ausgabemodul zum Ausgeben des Symbols.

8. Verfahren zur Tonsignalisierung über ein paketvermitteltes Netz (440), umfassend folgende Schritte:
Empfangen eines Symbols zur Übertragung über das paketvermittelte Netz (440),
Codieren des Symbols als erste und zweite Frequenzkomponenten (510, 520),
**gekennzeichnet durch**:
Anordnen der ersten und zweiten Frequenzkomponente (510, 520) nacheinander in einer Sequenz zur Übertragung über das paketvermittelte Netz (440) im Wesentlichen zum Belegen eines Doppeltonmehrfrequenz-("DTMF")-Tonzeitschlitzes (310a) bzw. eines Tonpausen-Zeitschlitzes (320a);
Übertragen der Sequenz über das paketvermittelte Netz (440);
Empfangen der Sequenz, Decodieren der Sequenz in das über das paketvermittelte Netz (440) übertrangene Symbol **durch** Bezugnahme auf die ersten und zweiten Frequenzkomponenten (510, 520) und
Ausgeben des Symbols.

9. Verfahren der Tonsignalisierung über ein paketvermitteltes Netz (440), umfassend folgende Schritte:
Empfangen eines Symbols zur Übertragung über das paketvermittelte Netz (440);
Codieren des Symbols als erste und zweite Frequenzkomponente (510,520);
**gekennzeichnet durch**:
Anordnen der ersten und zweiten Frequenzkomponente (510, 520) nacheinander in einer Sequenz zur Übertragung über das paketvermittelte Netz (440) im Wesentlichen zum Belegen eines Doppeltonmehrfrequenz-("DTMF")-Tonzeitschlitzes (310a) bzw. eines Tonpausen-Zeitschlitzes (320a) und
Übertragen der Sequenz über das paketvermittelte Netz (440).

10. Verfahren der Tonsignalisierung über ein paketvermitteltes Netz (440), **gekennzeichnet durch** folgende Schritte:
Empfangen über das paketvermittelte Netz (440) einer Sequenz, umfassend eine erste und zweite Frequenzkomponente, angeordnet nacheinander im Wesentlichen zum Belegen eines Doppeltonmehrfrequenz-("DTMF")-Tonzeitschlitzes (310a) bzw. eines Tonpausen-Zeitschlitzes (320a);
Decodieren der Sequenz in ein entsprechendes Symbol **durch** Bezugnahme auf die erste und zweite Frequenzkomponente (510, 520) und
Ausgeben des Symbols.

11. System, Vorrichtung oder Verfahren nach einem beliebigen vorhergehenden Anspruch, wobei das Symbol ein Standard-DTMF-Symbol ist.

12. System, Vorrichtung oder Verfahren nach einem beliebigen vorhergehenden Anspruch, wobei jedes Frequenzsignal oder jede Komponente eine Standard-DTMF-Frequenz ist.

13. System, Vorrichtung oder Verfahren nach einem beliebigen vorhergehenden Anspruch, wobei das erste Frequenzsignal oder die erste Komponente (510) eine der DTMF-Frequenzen der niedrigen Gruppe ist und das zweite Frequenzsignal oder die zweite Komponente (520) eine der DTMF-Frequenzen der hohen Gruppe ist.

14. System, Vorrichtung oder Verfahren nach einem beliebigen vorhergehenden Anspruch, wobei der DTMF-Tonzeitschlitz (310a) und Tonpausen-Zeitschlitz (320a) jeweils rund 40 bis 160 Millisekunden andauern.

15. System, Vorrichtung oder Verfahren nach einem beliebigen vorhergehenden Anspruch, wobei der DTMF-Tonzeitschlitz (310a) und Tonpausen-Zeitschlitz (320a) rund 80 Millisekunden beträgt.

## Revendications

1. Système de transmission d'éléments numériques multifréquence à deux tonalités (« DTMF ») sur un réseau à commutation de paquets (440), le système comprenant :
un client (410) configuré pour produire des éléments numériques DTMF en vue de leur émission sur un réseau à commutation de paquets (440) ;
un serveur (420) configuré pour recevoir les éléments numériques DTMF ; et
**caractérisé par**
un générateur multifréquence à tonalités séquentielles (460) disposé entre le client (410) et le réseau à commutation de paquets (440), lequel est configuré pour recevoir les éléments numériques DTMF de la part du client (410), coder chaque élément numérique DTMF correspondant sous la forme d'une séquence constituée d'un premier signal de fréquence et d'un deuxième signal de fréquence disposés l'un après l'autre essentiellement pour occuper respectivement un créneau temporel d'élément numérique DTMF et un créneau temporel d'intervalle entre éléments numériques, et émettre la séquence sur le réseau à commutation de paquets (440) ; et
un récepteur multifréquence à tonalités séquentielles (470) disposé entre le réseau à commutation de paquets (440) et le serveur (420) et configuré pour recevoir la séquence émise par le générateur multifréquence à tonalités séquentielles (460) et reconstruire à partir de la séquence un élément numérique DTMF correspondant en vue de sa transmission vers le serveur (420).

2. Système selon la revendication 1, le système (400) comprenant une pluralité de réseaux (400, 401, 402) et le client (410) étant en mesure de choisir l'un parmi la pluralité de réseaux (400, 401, 402) sur lequel envoyer des données et d'envoyer, suivant le cas, des éléments numériques DTMF ou la séquence codée sur le réseau choisi.

3. Système selon la revendication 1 ou 2, le système (400) étant configuré de telle sorte que le client (410) et le serveur (420) exécutent une routine de reconnaissance à un moment prédéterminé et étant configuré pour déclencher une alarme si la routine de reconnaissance échoue.

4. Système selon la revendication 1 ou 2, le système étant configuré pour commuter sur l'un parmi la pluralité de réseaux (400, 401, 402) afin d'établir une routine de reconnaissance qui aboutit.

5. Système selon la revendication 4, le réseau qui réalise une connexion réussie étant défini comme le réseau par défaut et les futures communications étant en priorité acheminées par le biais du réseau par défaut.

6. Appareil pour coder un symbole en vue de sa transmission sur un réseau à commutation de paquets (440), l'appareil (460) comprenant un module récepteur configuré pour recevoir un symbole à coder de la part d'une source externe ;
**caractérisé par** :
un module de codage configuré pour coder le symbole sous la forme d'une séquence constituée d'un premier signal de fréquence (510) et d'un deuxième signal de fréquence (520) disposés l'un après l'autre essentiellement pour occuper respectivement un créneau temporel d'élément numérique multifréquence à deux tonalités, « DTMF », (310a) et un créneau temporel d'intervalle entre éléments numériques (320a), et un module de sortie configuré pour transmettre la séquence sur le réseau à commutation de paquets (440).

7. Appareil pour décoder un symbole transmis sur un réseau à commutation de paquets (440), l'appareil (470) étant **caractérisé par** :
un module de réception configuré pour recevoir une séquence transmis sur le réseau à commutation de paquets (440) constituée d'un premier signal de fréquence (510) et d'un deuxième signal de fréquence (520) disposés l'un après l'autre essentiellement pour occuper respectivement un créneau temporel d'élément numérique multifréquence à deux tonalités, « DTMF », (310a) et un créneau temporel d'intervalle entre éléments numériques (320a), un module de décodage configuré pour décoder la séquence en le symbole transmis sur le réseau à commutation de paquets (440) utilisé en se référant au premier et au deuxième signal de fréquence (520), et un module de sortie pour délivrer le symbole.

8. Procédé de signalisation multifréquence sur un réseau à commutation de paquets (440), le procédé comprenant les étapes suivantes :
réception d'un symbole en vue de sa transmission sur le réseau à commutation de paquets (440) ;
codage du symbole sous la forme d'un premier et d'un deuxième composant de fréquence (510, 520) ;
**caractérisé par**
la disposition du premier et du deuxième composant de fréquence (510, 520) l'un après l'autre dans une séquence pour leur transmission sur le réseau à commutation de paquets (440) essentiellement pour occuper respectivement un créneau temporel d'élément numérique multifréquence à deux tonalités, « DTMF », (310a) et un créneau temporel d'intervalle entre éléments numériques (320a) ;
la transmission de la séquence sur le réseau à commutation de paquets (440) ;
la réception de la séquence ; le décodage de la séquence en symbole transmis sur le réseau à commutation de paquets (440) utilisé en se référant au premier et au deuxième composant de fréquence (510, 520) ; et
la délivrance du symbole.

9. Procédé de signalisation multifréquence sur un réseau à commutation de paquets (440), le procédé comprenant les étapes suivantes :
réception d'un symbole en vue de sa transmission sur le réseau à commutation de paquets (440) ;
codage du symbole sous la forme d'un premier et d'un deuxième composant de fréquence (510, 520) ;
**caractérisé par**
la disposition du premier et du deuxième composant de fréquence (510, 520) l'un après l'autre dans une séquence pour leur transmission sur le réseau à commutation de paquets (440) essentiellement pour occuper respectivement un créneau temporel d'élément numérique multifréquence à deux tonalités, « DTMF », (310a) et un créneau temporel d'intervalle entre éléments numériques (320a) ; et
la transmission de la séquence sur le réseau à commutation de paquets (440).

10. Procédé de signalisation multifréquence sur un réseau à commutation de paquets (440), le procédé comprenant les étapes suivantes :
réception sur le réseau à commutation de paquets (440) d'une séquence comprenant un premier et un deuxième composant de fréquence disposés l'un après l'autre essentiellement pour occuper respectivement un créneau temporel d'élément numérique multifréquence à deux tonalités, « DTMF », (310a) et un créneau temporel d'intervalle entre éléments numériques (320a) ;
décodage de la séquence en un symbole correspondant en se référant au premier et au deuxième composant de fréquence (510, 520) ; et
délivrance du symbole.

11. Système, appareil ou procédé selon l'une quelconque des revendications précédentes, le symbole étant un symbole DTMF standard.

12. Système, appareil ou procédé selon l'une quelconque des revendications précédentes, chaque signal ou composant de fréquence étant une fréquence DTMF standard.

13. Système, appareil ou procédé selon l'une quelconque des revendications précédentes, le premier signal ou composant de fréquence (510) étant l'une des fréquences du groupe DTMF inférieur et le deuxième signal ou composant de fréquence (520) étant l'une des fréquences du groupe DTMF supérieur.

14. Système, appareil ou procédé selon l'une quelconque des revendications précédentes, le créneau temporel d'élément numérique DTMF (310a) et le créneau temporel d'intervalle entre éléments numériques (320a) durant chacun d'environ 40 à 160 millisecondes.

15. Système, appareil ou procédé selon l'une quelconque des revendications précédentes, le créneau temporel d'élément numérique DTMF (310a) et le créneau temporel d'intervalle entre éléments numériques (320a) étant d'environ 80 millisecondes.
